# EUROPEAN PATENT APPLICATION

(11) **EP 3 255 706 A1**
(43) Date of publication of application: **13.12.2017**
(21) Application number: 16173149.2
(22) Date of filing: 06.06.2016
(51) Int. Cl.: H01M 4/04, H01M 4/505, H01M 4/525, H01M 4/58, H01M 10/42, H01M 10/52, H01M 10/0525

(54) **PROCESS FOR TREATING A CATHODE MATERIAL**

(71) Applicant: BASF SE, 67056 Ludwigshafen am Rhein (DE)
(72) Inventor: SEMRAU, Guenter, 67063 Kudwigshafen (DE); MENDEZ AGUDELO, Manuel Alejandro, 55130 Mainz (DE); HOECKER, Johannes David, 67098 Bad Duerkheim (DE); SCHMITZ, Rene, 70327 Stuttgart (DE)
(74) Representative: BASF IP Association

(57) **Abstract**

The present invention is directed towards a process for treating a cathode material, said process comprising the following steps
(a) providing a cathode active material selected from layered lithium transition metal oxides, lithiated spinels, lithium transition metal phosphate, and lithium nickel-cobalt aluminum oxides,
(b) slurrying said cathode active material, carbon in electrically conductive polymorph and, optionally, a binder in a solvent together with a compound according to general formula (I a) or (I b), 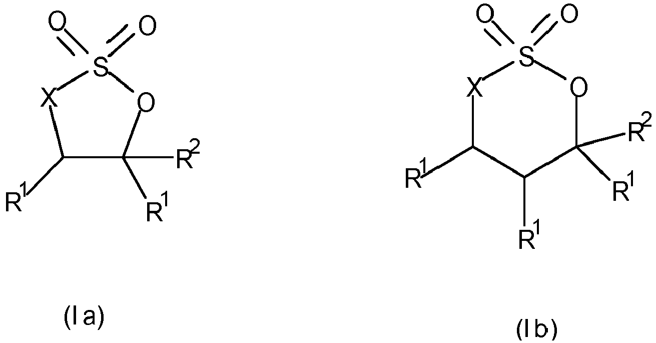 wherein X is selected from CH₂ and O,
R¹ are the same and selected from hydrogen and methyl,
R² is selected from hydrogen and C₁-C₈-alkyl,

(c) applying said slurry to a current collector, and
(d) at least partially removing said solvent.

## Description

Process for treating a cathode material, said process comprising the following steps
(a) providing a cathode active material selected from layered lithium transition metal oxides, lithiated spinels, lithium transition metal phosphate, and lithium nickel-cobalt aluminum oxides,
(b) slurrying said cathode active material, carbon in electrically conductive polymorph and, optionally, a binder in a solvent together with a compound according to general formula (Ia) or (Ib), 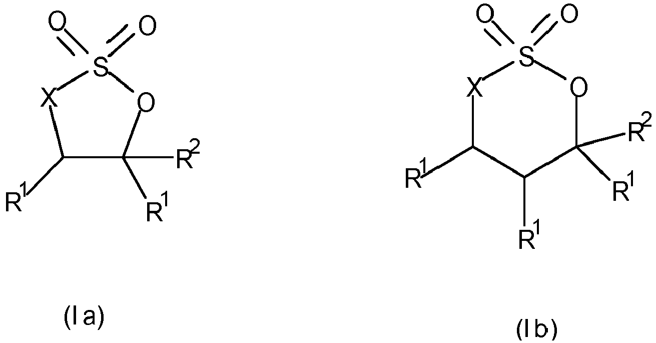
   wherein X is selected from CH₂ and O,
   R¹ are the same and selected from hydrogen and methyl,
   R² is selected from hydrogen and C₁-C₈-alkyl,
(c) applying said slurry to a current collector, and
(d) at least partially removing said solvent.

Storing electrical energy is a subject of still growing interest. Efficient storage of electric energy would allow electric energy to be generated when it is advantageous and used when needed. Secondary electrochemical cells are well suited for this purpose due to their rechargeability. Secondary lithium batteries are of special interest for energy storage since they provide high energy density due to the small atomic weight and the large ionization energy of lithium, and they have become widely used as a power source for many portable electronics such as cellular phones, laptop computers, mini-cameras, etc.

Although a lot of research work has been done during the years there are still some drawbacks of lithium ion batteries. Among others, gas development ("gassing") is a problem that may lead to reduced capacity. Especially during the first cycles gas may be developed that needs to be removed. Such gas may stem from various sources and reasons. One reason is electrolyte decomposition.

Diverse methods have been tried based on various theories, for example the deactivation of reactive groups on a cathode active material. In US 2009/0286157 a method of surface treatment is disclosed wherein the authors describe the surface treatment of cathode active materials with organometallic compounds selected from certain halosilanes. However, the halide acting as a leaving group may result in problems if it is susceptible to oxidation or reduction reactions.

Surface treatment of cathode active materials with phosphorus and sulfur compounds has been described in US 2012/0068128 as well.

In US 2013/0232772, a treatment of an electrochemically active material in the gas phase is described. Examples are the treatment of Li₄₊ₓTi₅O₁₂ with F₂C=S, O=C=S, cis-olefins, BF₃ or SiCl₄. The scope of reagents that may be transferred into the gas phase is quite limited. Some of them are quite corrosive, for example BF₃ and SiCl₄, or they react under formation of corrosive by-products or by-products otherwise undesired, for example H₂S. In addition, many of them lead to the formation of carbonyl groups that may decompose during cycling under CO₂ formation.

It was therefore an objective of the present invention to provide a method for improving the cycling behavior and especially reducing the capacity fade and the gas evolution of lithium ion batteries without formation of by-products that raise hazard concerns.

Accordingly, the process defined at the outset has been found, hereinafter also defined as inventive process or process according to the present invention.

The inventive process comprises the following steps, hereinafter also referred to as step (a), step (b), step (c) etc.:
(a) providing a cathode active material selected from layered lithium transition metal oxides, lithiated spinels, lithium transition metal phosphate, and lithium nickel-cobalt aluminum oxides,
(b) slurrying said cathode active material, carbon in electrically conductive polymorph and, optionally, a binder in a solvent together with a compound according to general formula (Ia) or (Ib), 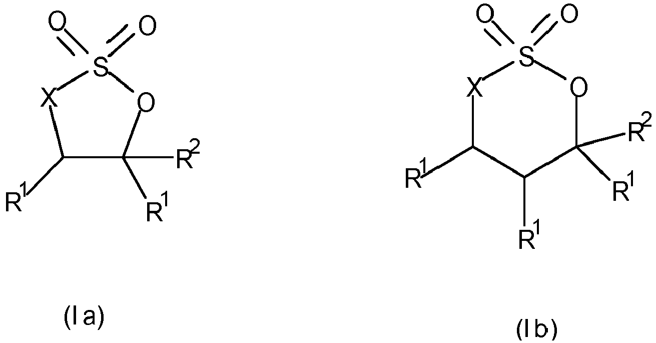
   wherein X is selected from CH₂ and O,
   R¹ are the same and selected from hydrogen and methyl,
   R² is selected from hydrogen and C₁-C₈-alkyl,
(c) applying said slurry to a current collector, and
(d) at least partially removing said solvent.

In step (a), a cathode active material is provided, said cathode active material being selected from layered lithium transition metal oxides, lithiated spinels, lithium transition metal phosphate with olivine structure, and lithium nickel-cobalt aluminum oxides.

Preferably, cathode active materials are selected from materials capable of incorporating and releasing lithium ions.

Examples of layered lithium transition metal oxides are LiCoO₂, LiNiO₂, LiMnO₂, and mixed transition metal oxides with a layered structure, generally having the general formula Li_{(1+z)}[NiₐCo_{b}Mn_{c}]_{(1-z)}O₂₊ₑ wherein z is 0 to 0.3; a, b and c may be same or different and are independently 0 to 0.95 wherein a + b + c = 1; and -0.1 ≤ e ≤ 0.1. Layered lithium transition metal oxides may be non-doped or doped, for example with Ti, Al, Mg, Ca, or Ba.

Examples of lithiated transition metal phosphates are LiMnPO₄, LiNiPO₄, LiFePO₄ and LiCoPO₄, and mixed lithium transition metal phosphates containing combinations of Fe and Co or Fe and Mn or Fe and Ni instead of Fe. Lithiated transition metal phosphates may contain lithium phosphate in small amounts, for example 0.01 to 5 mole-%. Examples of lithium phosphates are Li₃PO₄ and Li₄P₂O₇.

In a preferred embodiment, lithiated transition metal phosphates are provided together with carbon in electrically conductive form, for example coated with carbon in electrically conductive form. In such embodiments, the ratio of lithiated transition metal phosphate to carbon is usually in the range of from 100:1 to 100:10, preferably 100:1.5 to 100:6. In the context of the present invention, the terms "in electrically conductive form" and "in electrically conductive polymorph" are used interchangeably.

Lithiated transition metal phosphates usually have an olivine structure.

Examples of manganese-containing are spinels like LiMn₂O₄ and spinels of general formula Li₁₊ₜM₂₋ₜO_{4-d} wherein d is 0 to 0.4, t is 0 to 0.4 and M is Mn and at least one further metal selected from the group consisting of Co and Ni.

Examples of lithium nickel cobalt aluminum oxides, preferred of them having the general formula Li_{(1+g)}[NiₕCoᵢAlⱼ]_{(1-g)}O₂. Typical values for g, h, i, and j are: g = 0 to 0.1, h = 0.8 to 0.85, i = 0.15 to 0.20, j = 0.01 to 0.05.

Preferred cathode active materials are layered lithium transition metal oxides and lithium nickel cobalt aluminum oxides. Particularly preferred examples of are layered lithium transition metal oxides are Li_{(1-z})[Ni_{0.33}Co_{0.33}Mn_{0.33}]_{(1-z)}O₂, Li_{(1-z)}[Ni_{0.5}Co_{0.2}Mn_{0.3}]_{(1-z)}O₂, Li_{(1-z)}[Ni_{0.4}Co_{0.2}Mn_{0.4}]_{(1-z)}O₂, Li_{(1-z)}[Ni_{0.4}Co_{0.3}Mn_{0.3}]_{(1-z)}O₂, Li_{(1-z)}[Ni_{0.6}Co_{0.2}Mn_{0.2}]_{(1-z)}O₂, Li_{(1-z)}[Ni_{0.7}Co_{0.2}Mn_{0.1}]_{(1-z)}O₂, and Li_{(1+z)}[Ni_{0.8}Co_{0.1}Mn_{0.1}]_{(1-z)}O₂ wherein z is selected in each case from 0.1 to 0.25

Cathode active material may be in particulate form. The term "particulate" in the context with cathode active materials shall mean that said material is provided in the form of particles with a maximum particle diameter not exceeding 32 µm. Said maximum particle diameter can be determined by, e. g. sieving.

In one embodiment of the present invention, the cathode active material provided in step (a) is comprised of spherical particles. Spherical particles are particles have a spherical shape. Spherical particles shall include not just those which are exactly spherical but also those particles in which the maximum and minimum diameter of at least 90% (number average) of a representative sample differ by not more than 10%.

In one embodiment of the present invention, the cathode active material provided in step (a) is comprised of secondary particles that are agglomerates of primary particles. Preferably, the cathode active material provided in step (a) is comprised of spherical secondary particles that are agglomerates of primary particles. Even more preferably, the cathode active material provided in step (a) is comprised of spherical secondary particles that are agglomerates of spherical primary particles or platelets.

In one embodiment of the present invention, the mean particle diameter (D50) of secondary particles of cathode active material provided in step (a) is in the range of from 6 to 12 µm, preferably 7 to 10 µm. The mean particle diameter (D50) in the context of the present invention refers to the median of the volume-based particle diameter, as can be determined, for example, by light scattering.

In one embodiment of the present invention, primary particles of cathode active material provided in step (a) have an average diameter in the range from 1 to 2000 nm, preferably from 10 to 1000 nm, particularly preferably from 50 to 500 nm. The average primary particle diameter can, for example, be determined by SEM or TEM. SEM is an abbreviation of scanning electron microscopy, TEM is an abbreviation of transmission electron microscopy.

In a preferred embodiment of the present invention, in step (a) a mixture of two different cathode active materials may be provided, for example two layered lithiated transition metal oxides with different composition, or a layered lithium transition metal oxide and a lithium nickel cobalt aluminum oxide, or two lithium nickel cobalt aluminum oxides with different composition, or a layered lithiated transition metal oxide and a lithiated spinel.

In step (b), the cathode active material provided in step is slurried together with carbon in electrically conductive polymorph and, optionally, a binder. Said slurrying is performed in a solvent together with a compound according to general formula (I a) or (I b), 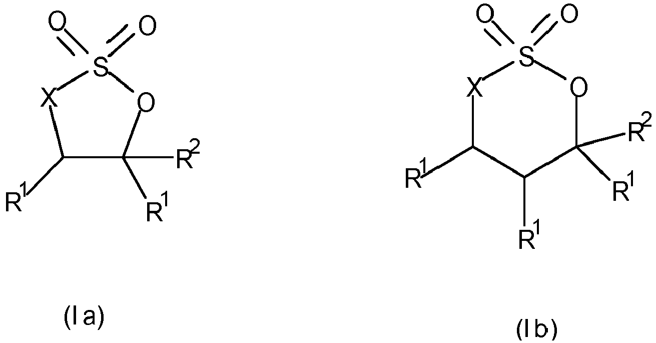
wherein X is selected from CH₂ and O, CH₂ being preferred,
R¹ are the same and selected from hydrogen and methyl, preferred is hydrogen,
R² is selected from C₁-C₈-alkyl, for example methyl, ethyl, n-propyl, iso-propyl, n-butyl, iso-butyl, n-hexyl, n-heptyl, n-octyl, iso-octyl, preferred are n-C₁-C₄-alkyl, and particularly preferred is hydrogen.

Preferred are compounds according to formula (I a), more preferred are compounds according to formula (I a) wherein X is CH₂ and all R¹ are hydrogen, and even more preferred is 1,3-propansultone, which is a compound according to general formula (I a) wherein R¹ and R² is hydrogen and X is CH₂.

Carbon in electrically conductive polymorph may be selected from graphite, carbon black, acetylene black, carbon nanotubes, graphene or mixtures of at least two of the aforementioned substances.

Cathode active material provided in step (a) may by slurried together with one or more binders, for example one or more organic polymers like polyethylene, polyacrylonitrile, polybutadiene, polypropylene, polystyrene, polyacrylates, polyvinyl alcohol, polyisoprene and copolymers of at least two comonomers selected from ethylene, propylene, styrene, (meth)acrylonitrile and 1,3-butadiene, especially styrene-butadiene copolymers, and halogenated (co)polymers like polyvinlyidene chloride, polyvinyl chloride, polyvinyl fluoride, polyvinylidene fluoride (PVdF), polytetrafluoroethylene, copolymers of tetrafluoroethylene and hexafluoropropylene, copolymers of tetrafluoroethylene and vinylidene fluoride, and polyacrylonitrile.

The most preferred binder is PVDF.

In one embodiment of the present invention, the weight ratio of cathode active material to carbon in electrically conductive polymorph is in the range of from 100:1 to 100:10, preferably 100:1.5 to 100:6.

If binder is present, the ratio of cathode active material to said binder is in the range of from 200:1 to 100:10, preferably 100:1 to 100:5.

Cathode active material provided in step (a), electrically conductive carbon and, if applicable, binder, are slurried in a solvent. Said solvent may be a mixture of two or more solvents. In preferred embodiments, though, in step (b) only one solvent is used. Suitable solvents for step (b) should be aprotic. In the context of the present invention, "aprotic" means that a solvent does not bear a proton that can be removed with aqueous 1 M NaOH.

Suitable solvents are, for example, aliphatic or aromatic hydrocarbons, organic carbonates, and also ethers, acetals, ketals and aprotic amides and ketones. Examples include: n-heptane, n-decane, decahydronaphthalene, cyclohexane, toluene, ethylbenzene, ortho-, meta- and para-xylene, dimethyl carbonate, diethyl carbonate, methyl ethyl carbonate, ethylene carbonate, propylene carbonate, diethyl ether, diisopropyl ether, di-n-butyl ether, methyl tert-butyl ether, 1,2-dimethoxyethane, 1,1-dimethoxyethane, 1,2-diethoxyethane, 1,1-diethoxyethane, tetrahydrofuran (THF), 1,4-dioxane, 1,3-dioxolane, N,N-dimethylformamide, N,N-dimethylacetamide and N-methylpyrrolidone, N-ethylpyrrolidone, acetone, methyl ethyl ketone, and cyclohexanone.

In a preferred embodiment of the present invention, the solvent used in step (b) is selected from aprotic solvents with a boiling point at normal pressure in the range of from 105 to 200°C. examples of suitable solvents are N,N-dimethyl formamide ("DMF"), N,N-dimethyl acetamide ("DMA"), N-C₁-C₈-2-alkylpyrrolidones, for example N-methyl-2-pyrrolidone ("NMP"), N-ethyl-2-pyrrolidone ("NEP"), N-n-butyl-2-pyrrolidone, and N-C₅-C₈-2-cycloalkylpyrrolidones, for example N-cyclohexyl-2-pyrrolidone. Preferred examples are DMF, NMP and NEP.

In a preferred embodiment of the present invention, the solvent used in step (b) has a low water content, for example less than 1 % by weight, preferably 3 to 100 ppm by weight and even more preferred 5 to 50 ppm by weight.

The weight ratio of solvent to total solids may in in the ratio of 10:1 to 1:5, preferably 5:1 to 1:2.5. Solids in this content are cathode active material, carbon in electrically conductive polymorph, compound according to general formula (I a) or (I b), and, if applicable, binder.

In one embodiment of the present invention, the amount of compound according to general formula (I a) or (I b) is in the range of 0.1 to 10 % by weight, referring to the total amount of solvent, preferably 0.5 to 5 % by weight.

Slurrying in step (b) is effected by mixing. The order of addition of the various ingredients may be chosen among a couple of options. It is preferred, though, to mix compound according to general formula (I a) or (I b), as the case may be, with solvent first before introducing one or more solids.

In one embodiment of the present invention, a vessel is charged with a mixture of compound according to general formula (I a) or (I b) and solvent, or compound according to general formula (I a) or (I b) is dissolved in solvent. Then, cathode active material, carbon in electrically conductive polymorph and, if applicable, binder are added, preferably under stirring or shaking. Said vessel may be a stirred tank reactor or a mixing drum. In embodiment wherein a mixing drum is selected, said mixing may be effected by rotating the mixing drum.

In another embodiment of the present invention, a vessel is charged with cathode active material, carbon in electrically conductive polymorph and, if applicable, binder. Then, preferably under stirring or rotating, a solution of compound according to general formula (I a) or (I b) in solvent is added.

Mixing may be effected in one or more vessels, for example in a cascade of two or more stirred tank reactors, or in a sequence of a stirred vessel and an extruder. Extruders are preferred vessels in embodiments wherein the solids content of the slurry is 80% or more. In embodiments wherein the solids content of the slurry is 70% or less, stirred tank reactors are preferred.

In one embodiment of the present invention, an additional step of mixing cathode active material with carbon in electrically conductive polymorph and, optionally, a binder in the presence of a solvent but in the absence of compounds according to general formula (I a) and (I b), said additional mixing step being performed before step (b).

In one embodiment of the present invention, cathode active material is generated simultaneously with or in the presence of carbon in electrically conductive form. This embodiment is preferred in embodiments wherein cathode active material is selected from lithiated transition metal phosphates, for example LiFePO₄ or LiCoPO₄ or LiMnPO₄. In such embodiments, step (b) is directed towards mixing such cathode active material - together with carbon - is mixed with solvent and compound according to general formula (I a) and (I b) and, optionally, binder, and, optionally, with more carbon in electrically conductive form.

In step (b), a slurry is obtained.

During step (b), compound according to general formula (I a) or (I b) is allowed to interact with the cathode active material. In the course of the interaction, mixing operations may be continued or discontinued.

In one embodiment of the present invention, the duration of step (d) is in the range of from 30 seconds to 24 hours, preferably 5 minutes to 12 hours and even more preferably 30 minutes to 5 hours.

In one embodiment of the present invention, step (b) is carried out under inert gas, for example nitrogen or a noble gas such as argon. In other embodiments, step (b) is carried out under nitrogen-enriched air, for example with an oxygen content in the range of from 1 to 18% by volume.

In one embodiment of the present invention, step (b) is performed at a temperature in the range of from 5 to 200°C, preferably 10 to 100°C and even more preferably 15°C to 60°C. Heating - if required - may be effected by indirect heating. In even more embodiments, heat transfer occurs during the mixing, and cooling has to effected. Step (b) is preferably carried out in a closed vessel to prevent evaporation of the solvent. In other embodiments, a reflux condenser is connected to the mixing device.

Without wishing to be bound by any theory it is believed that the respective compound according to general formula (I a) or (I b) reacts with free hydroxyl groups of cathode active material und thus prevents reaction of the electrolyte later on in the electrochemical cell.

Steps (c) and (d) may be performed in any order.

During step (c), the slurry is applied to a current collector. Current collector are preferably selected from films, for example metal foils or polymer films. Said polymer films may be used as transfer media. Preferred metal foils are nickel foils, titanium foils and stainless steel foils, even more preferred are aluminum films. Preferred polymer films are polyester films, for example polybutylene terephthalate films that may be untreated or treated with a silicone.

In one embodiment of the present invention, current collectors are selected from metal foils with an average thickness in the range of from 5 to 50 µm, preferably 10 to 35 µm. Even more preferred are aluminum foils with an average thickness in the range of from 5 to 50 µm, preferably 10 to 35 µm.

In one embodiment of the present invention, current collectors are selected from polymer films with an average thickness in the range of from 8 to 50 µm, preferably 12 to 35 µm. Even more preferred are polybutylene terephthalate films with an average thickness in the range of from 8 to 50 µm, preferably 12 to 35 µm. Such polymer films may serve as a precursor, and after application of the slurry and drying the cathode material is applied on a metal foil through transfer coating or transfer lamination.

In one embodiment of the present invention, the slurry is applied to the current collector by coating, spraying, or dipping the current collector into the slurry. Preferred means are a squeegee or an extruder. Extruders are preferred means for applying said slurry to the respective current collectors in embodiments wherein the solids content of the slurry is 75% or more.

In one embodiment of the present invention, slurrying of step (b) and applying said slurry to the respective current collector according to step (c) is performed with the help of the same extruder, the mixing being effected in the first part of the extruder and the applying being effected with nozzle.

In step (d) of the inventive process, the solvent used for slurrying is at least partially removed.

Removal of said solvent may be accomplished by, for example, filtration, extractive washing, distillative removal of solvent, drying and evaporation. In a preferred embodiment, all or almost all solvent, for example 99% by weight or more, is removed by evaporation.

In embodiments of evaporative removal of solvent ("evaporation"), step (d) may be performed at a temperature in the range of from 50 to 200°C. In embodiments of filtration or extractive washing, step (d) may be performed at a temperature in the range of from zero to 100°C.

In embodiments wherein step (d) is performed as distillative removal or evaporation of solvent, a pressure in the range of from 1 to 500 mbar may be applied. In embodiments of filtration or extractive washing, step (d) may be performed at ambient pressure as well.

By the inventive process, a material is obtained that exhibits excellent properties as cathode material in lithium ion batteries. Especially with respect to gassing and capacity fade, excellent properties are observed.

In one embodiment of the present invention, the inventive process may comprise one or more additional steps, for example calendering, or an after-treatment, for example by dip coating.

Cathode materials treated according to the inventive process may be used in lithium ion batteries with any type of electrolyte and with any type of anodes.

Anodes in lithium ion batteries usually contain at least one anode active material, such as carbon (graphite), TiO₂, lithium titanium oxide ("LTO"), silicon or tin. Anodes may additionally contain a current collector, for example a metal foil such as a copper foil, and a binder.

Electrolytes useful in lithium ion batteries may comprise at least one non-aqueous solvent, at least one electrolyte salt and, optionally, additives.

Nonaqueous solvents for electrolytes useful in lithium ion batteries may be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-C₁-C₄-alkylene glycols and in particular polyethylene glycols. Polyethylene glycols may comprise up to 20 mol% of one or more C₁-C₄-alkylene glycols. Polyalkylene glycols are preferably polyalkylene glycols having two methyl or ethyl end caps.

The molecular weight M_{w} of suitable polyalkylene glycols and in particular suitable polyethylene glycols can be at least 400 g/mol. The molecular weight M_{w} of suitable polyalkylene glycols and in particular suitable polyethylene glycols can be up to 5,000,000 g/mol, preferably up to 2,000,000 g/mol.

Examples of suitable non-cyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable non-cyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable non-cyclic organic carbonates are dimethyl carbonate, ethyl methyl carbonate and diethyl carbonate. Examples of suitable cyclic organic carbonates are compounds of the general formulae (II) and (III) 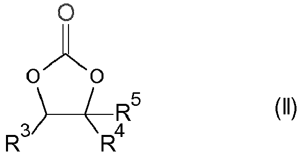 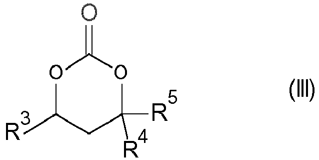 where R³, R⁴ and R⁵ can be identical or different and are selected from among hydrogen and C₁-C₄-alkyl, for example methyl, ethyl, n-propyl, isopropyl, n-butyl, isobutyl, sec-butyl and tert-butyl, with R² and R³ preferably not both being tert-butyl.

In particularly preferred embodiments, R³ is methyl and R⁵ and R⁴ are each hydrogen, or R³, R⁴ and R⁵ are each hydrogen.

Another preferred cyclic organic carbonate is vinylene carbonate, formula (IV).

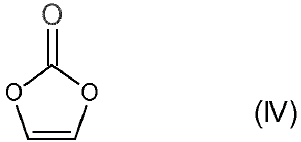

Further examples are γ-butyrolactone and fluorinated ethers.

The solvent or solvents is/are preferably used in the water-free state, i.e. with a water content in the range from 1 ppm to 0.1 % by weight, which can be determined, for example, by Karl-Fischer titration.

Electrolytes useful in lithium ion batteries further comprises at least one electrolyte salt. Suitable electrolyte salts are, in particular, lithium salts. Examples of suitable lithium salts are LiPF₆, LiBF₄, LiClO₄, LiAsF₆, LiCF₃SO₃, LiC(CₙF₂ₙ₊₁SO₂)₃, lithium imides such as LiN(CₙF₂ₙ₊₁SO₂)₂, where n is an integer in the range from 1 to 20. Further examples are LiN(SO₂F)₂, Li₂SiF₆, LiSbF₆, LiAlCl₄ and salts of the general formula (CₙF₂ₙ₊₁SO₂)ₜYLi, wherein n is defined as above and t is defined as follows:
t = 1, when Y is selected from among oxygen and sulfur,
t = 2, when Y is selected from among nitrogen and phosphorus, and
t = 3, when Y is selected from among carbon and silicon.

Preferred electrolyte salts are selected from among LiC(CF₃SO₂)₃, LiN(CF₃SO₂)₂, LiPF₆, LiBF₄, LiClO₄, with particular preference being given to LiPF₆ and LiN(CF₃SO₂)₂.

Electrolytes useful in lithium ion batteries containing the cathode active material treated according to the inventive process may contain one or more additives, for example cyclohexyl benzene, but they preferably do not contain additional propane sultone.

The present invention is further illustrated by working examples.

### Working examples

The following cathode active materials ("CAM") were used:
CAM.1: Li_{(1-z)}[Ni_{0.6}Co_{0.2}Mn_{0.2}]_{(1-z)}O₂ with z = 0.03

Conductive carbon: active carbon, BET surface area of 62 m²/g, commercially available as "Super C 65L" from Timcal
Graphite: commercially available as KS6 from Timcal
Binder: polyvinylidene fluoride, commercially available as Kynar® HSV900, Solvay

Compound according to general formula (I a.1): R¹ = R² = H, X = CH₂.

### I. Treatment of cathode active materials

### I.1 Treatment of cathode active material

Steps (a.1): 20 g of CAM.1 were provided.
Step (b.1): A sample container was filled with 15 g NEP and 0.65 g binder and 0.45 g 1,3-propanesultone, compound (I a.1), and mixed in a planetary mixer (2000 rpm) for 1 h until the binder was dissolved in the solvent. Amounts of 0.54 g graphite and 0.32 g conductive black were added and mixed for another 24 minutes. Then, 20 g of the CAM.1 were added and mixed for 15 minutes. A slurry was obtained.
Step (c.1): The slurry obtained from step (b.1) was applied to an aluminum foil, thickness: 20 µm, with the help of a doctor blade. A loaded aluminum foil was obtained.
Step (d.1): The loaded aluminum foil from step (c.1) was dried under vacuum for 20 hours in a vacuum oven at 120 °C. The loading after drying was 2.0 mAh/cm². After cooling to room temperature in a hood cathodes were punched out. The active area of the cathode was 50 mm x 50 mm. The cathodes were then weighed and introduced into an argon glove box, where they were vacuum-dried again. Then, pouch cells were built.

(cat.1) was obtained.

### I.2 Comparative treatment

Steps (a.2): 20 g of CAM.1 were provided.
Step (b.2): A sample container was filled with 15 g NEP and 0.65 g binder and mixed in a planetary mixer (2000 rpm) for 1 h until the binder was dissolved in the solvent. Amounts of 0.54 g graphite and 0.32 g conductive black were added and mixed for another 24 minutes. Then, 20 g of the CAM.1 were added and mixed for 15 minutes. A slurry was obtained.
Step (c.2): The slurry obtained from step (b.2) was applied to an aluminum foil, thickness: 20 µm, with the help of a doctor blade. A loaded aluminum foil was obtained.
Step (d.2): The loaded aluminum foil from step (c.2) was dried under vacuum for 20 hours in a vacuum oven at 120 °C. The loading after drying was 2.0 mAh/cm². After cooling to room temperature in a hood cathodes were punched out. The active area of the cathode was 50 mm x 50 mm. The cathodes were then weighed and introduced into an argon glove box, where they were vacuum-dried again. Then, pouch cells were built.

c-(cat.2) was obtained.

### II. Manufacture of electrochemical cells

### II.1 Manufacture of electrochemical cell from cathodes according to I.1

Pouch cells were prepared by stacking one layer each of a graphite anode and a cathode - or comparative cathode - with a separator in between to give a capacity of 44 mAh. The cells were filled with 700µl of electrolyte and sealed in PE/PP laminated aluminum foils. The electrolyte was a mixture of 1.15 M LiPF6 in EC:EMC:DMC 2:4:4 by volume with 2 wt.-% of vinylene carbonate as additive.

Separator: polypropylene monolayer separator, commercially available as Celgard 2500. Anode: graphite. Potential range of the cell: 2.50 V - 4.2 V.

EMC.1 and c-EC.2 were obtained, respectively.

### III. Testing of electrochemical cells

### III.1 Test for capacity fading

Electrochemical testing:
After electrolyte filling and sealing the cells were stored for 2 h before the electrochemical formation protocol was applied.

The formation of the cells was done by charging at a charge rate of 0.2 C and storing the cells in a fully charged condition (4.2 V) for 5 days at 45 °C and discharging afterwards After the formation first the capacity of the cells was checked by a 0.2 C charge and discharge step. After this the cells were stored at 60 °C for 2 days in a fully charged state (4.2 V). The resistance of the cells was measured before storage and afterwards by applying 1 C, 2 C and a 3 C pulse (at 3.6 V) and measuring the voltage drop accordingly. In addition the gas amount formed while storage was measured by an Archimedes setup. The results are summarized in the following Table.

**Table 1: Overall capacity of inventive electrochemical cells and of comparative electrochemical cells, gassing**

| EMC | cathode | Gassing [µl] | Resistance increase | Capacity drop |
|---|---|---|---|---|
| EMC.1 | (cat.1) | 377 | 198 % | 84 % |
| c-EMC.2 | c-(cat.2) | 441 | 399 % | 43 % |

All capacities are in mA·h/g. DC: Discharge.
Gassing: Amount of gas during storage at 60 °C for 2 days.
Resistance increase: after storage at 60 °C relative to initial resistance
Capacity drop: 2 C discharge capacity relative to initial capacity after storage

## Claims

1. Process for treating a cathode material, said process comprising the following steps
(a) providing a cathode active material selected from layered lithium transition metal oxides, lithiated spinels, lithium transition metal phosphate, and lithium nickel-cobalt aluminum oxides,
(b) slurrying said cathode active material, carbon in electrically conductive form and, optionally, a binder in a solvent together with a compound according to general formula (I a) or (I b), 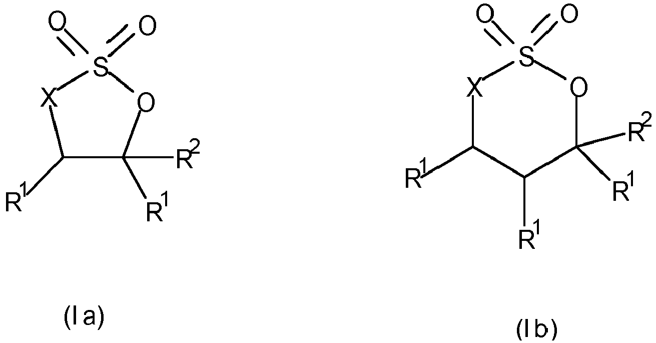
wherein X is selected from CH₂ and O,
R¹ are the same and selected from hydrogen and methyl,
R² is selected from hydrogen and C₁-C₈-alkyl,
(c) applying said slurry to a current collector, and
(d) at least partially removing said solvent.

2. Process according to claim 1 wherein in step (b) a compound according to formula (I a) is used with X being CH₂ and R² and R¹ being hydrogen.

3. Process according to any of the preceding claims wherein step (b) is performed at a temperature in the range of from 10 to 100°C.

4. Process according to any of claims 1 to 3 wherein step (c) is performed with a squeegee or an extruder.

5. Process according to any of the preceding claims wherein in step (b) said solvent is selected from aprotic solvents with a boiling point at normal pressure in the range of from 105 to 200°C.

6. Process according to any of the preceding claims comprising an additional step of mixing cathode active material with carbon in electrically conductive form and, optionally, a binder in the presence of a solvent but in the absence of compounds according to general formula (I a) and (I b), said additional mixing step being performed before step (b).

7. Process according to any of the preceding claims wherein said cathode active material is selected from layered lithium transition metal oxides and lithium nickel-cobalt aluminum oxides.
